# EUROPEAN PATENT SPECIFICATION

(11) **EP 2 771 371 B1**
(45) Date of publication and mention of the grant of the patent: **07.12.2016**
(21) Application number: 12770490.6
(22) Date of filing: 11.10.2012
(51) Int. Cl.: C08F 4/651, C08F 10/00, C08F 4/654

(54) **CATALYST COMPONENTS FOR THE POLYMERIZATION OF OLEFINS**
KATALYSATOR-KOMPONENTE ZUR OLEFINPOLYMERISATION
COMPOSANT DE CATALYSEUR POUR LA POLYMÉRISATION D'OLÉFINES

(30) Priority: 19.10.2011 EP 11185721; 19.10.2011 US 201161549127 P
(43) Date of publication of application: 03.09.2014
(73) Proprietor: Basell Poliolefine Italia S.r.l., 20127 Milano (IT)
(72) Inventor: NIFANT'EV, Ilya, Moscow 119526 (RU); MIGNOGNA, Alessandro, I-44122 Ferrara (IT); BAGROV, Vladimir, Moscow 119192 (RU); ESPOSITO, Simona, I-44122 Ferrara (IT); GUIDOTTI, Simona, I-44122 Ferrara (IT); MORINI, Giampiero, I-44122 Ferrara (IT); PATER, Joachim T. M., I-44122 Ferrara (IT); PIEMONTESI, Fabrizio, I-44122 Ferrara (IT); TOLORAYA, Sophia A., Moskow 107078 (RU)
(74) Representative: Giberti, Stefano
(86) International application number: PCT/EP2012/070136
(87) International publication number: WO 2013/057036

(56) References cited:
- WO-A1-2004/087771
- KR-A- 20100 066 612
- WEN XIAOJING ET AL: "Magnesium chloride supported Ziegler-Natta catalysts containing succinate internal electron donors for the polymerization of propylene", JOURNAL OF APPLIED POLYMER SCIENCE, JOHN WILEY & SONS, INC, US, vol. 118, no. 3, 5 November 2010 (2010-11-05), pages 1853-1858, XP008148921, ISSN: 0021-8995, DOI: 10.1002/APP.32558 [retrieved on 2010-06-07]

## Description

The present invention relates to catalyst components for the polymerization of olefins, in particular propylene, comprising a Mg dihalide based support on which are supported Ti atoms and at least an electron donor selected from a specific class of compounds. The present invention further relates to the catalysts obtained from said components and to their use in processes for the polymerization of olefins in particular propylene.

Catalyst components of the Ziegler-Natta type for the stereospecific polymerization of olefins are widely known in the art. The latest developed catalysts for propylene polymerization comprise a solid catalyst component, constituted by a magnesium dihalide on which are supported a titanium compound and an internal electron donor compound, used in combination with an Al-alkyl compound and often with an external donor which is needed in order to obtain higher isotacticity. One of the preferred classes of internal donors is constituted by the esters of aromatic carboxylic acids such as benzoates and phthalates this latter being the most used in view of their excellent performances. The phthalates are used as internal donors in combination with alkylalkoxysilanes as external donor. This catalyst system is capable of giving good performances in terms of activity, and propylene polymers with high isotacticity and xylene insolubility endowed with an intermediate molecular weight distribution.

As the use of some phthalates has been recently addressed as involving potential toxicity problems, the interest in exploration of alternative classes of donor has increased.

Alkyl cyclohexane dicarboxylate derivatives is a class of compounds already known and used as internal donors modifiers in the preparation of ZN catalyst for the stereospecific polymerization of propylene. Their use is disclosed for example in US2009/0069515 and WO2004/087771. Both documents, as well as KR 10-2010-0066612, also mention the possible use of bicyclic structures having at least one C6 member ring. In the latter patent application, only catalyst components containing norbornene dicarboxylate derivatives are shown. The results obtained by these catalysts are not good in terms of activity/stereospecificity balance.

WO2004/087771 mentions the possibility to place substituents or bridges on the cyclohexane ring in order to force the molecule toward conformations in which the carboxylate groups are in closer proximity. While this indication results totally vague in the absence of a conformational analysis determining the energy associated with each possible conformation, it is noted that according to Table 1 the norbornane dicarboxylate derivative gives the worst performances in terms of activity/stereospecificity balance.

It has been therefore surprising to discover that certain specific bicyclic structures are able to generate catalyst components offering high activity and stereospecificity in the propylene and butene-1 polymerization.

It is therefore an object of the present invention a solid catalyst component for the polymerization of olefins comprising Mg, Ti and an electron donor compound of the following formula (I) 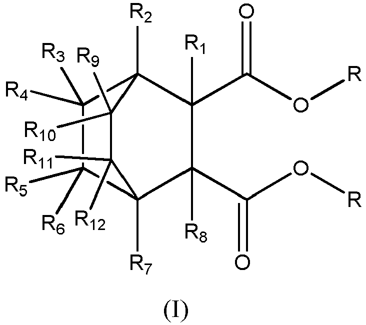 In which

The R₁ to R₁₂ groups, equal to or different from each other, are hydrogen, halogen or C₁-C₁₅ hydrocarbon groups, optionally containing an heteroatom selected from halogen, P, S, O, N and Si, the R groups equal to or different from each other, are C₁-C₁₅ hydrocarbon groups and the carboxylate groups are in trans configuration with respect to each other.

Preferably R groups are selected from C₁-C₁₀ hydrocarbon groups more preferably from C₁-C₅ alkyl groups, such as methyl, ethyl, or isobutyl.

Preferably, R₁ and R₈ are selected from hydrogen and C₁-C₅ alkyl groups. Preferably, they are not simultaneously alkyl groups and more preferably they are both hydrogen.

All the other R₂-R₇ and R₉-R₁₂ groups can be preferably and independently selected from are hydrogen and C₁-C₁₀ hydrocarbon groups and more preferably from hydrogen and C₁-C₆ alkyl groups.

Preferably, the said R₂-R₇ and R₉-R₁₂ groups are not simultaneously hydrocarbon groups. More preferably, among the R₂-R₇ and R₉-R₁₂ groups only those that are relatively distant from the carboxylates are hydrocarbon groups. More preferably, only one R₂-R₇ and R₉-R₁₂ group per each cycle of the bicycle structure (I) is selected from hydrocarbon groups. In a particularly preferred embodiment, R is preferably selected from linear C₁-C₅ alkyl groups. Particularly preferred are the structures in which all the R₁-R₁₂ groups are hydrogen.

Non limiting examples of structures (I) are the following:
Diethyl trans-bicyclo[2.2.2]octane-2,3-dicarboxylate, diisobutyl trans-bicyclo[2.2.2]octane-2,3-dicarboxylate, diethyl 1-isopropyl-4-methyl trans-bicyclo[2.2.2]octane-2,3-dicarboxylate, diethyl 5-isopropyl-7-methyl trans-bicyclo[2.2.2]octane-2,3-dicarboxylate, diisobutyl 5-isopropyl-7-methyl trans-bicyclo[2.2.2]octane-2,3-dicarboxylate, bis(2-ethylhexyl) trans-bicyclo[2.2.2]octane-2,3-dicarboxylate, dibutyl trans-bicyclo[2.2.2]octane-2,3-dicarboxylate, diisopropyl trans-bicyclo[2.2.2]octane-2,3-dicarboxylate, dimethyl trans-bicyclo[2.2.2]octane-2,3-dicarboxylate, dipropyl trans-bicyclo[2.2.2]octane-2,3-dicarboxylate, 2-(2-ethylhexyl) 3-(2-ethylpentyl) 1-isopropyl-4-methyl trans-bicyclo[2.2.2]octane-2,3-dicarboxylate, dibutyl 1-isopropyl-4-methyl trans-bicyclo[2.2.2]octane-2,3-dicarboxylate, diisopropyl 1-isopropyl-4-methyl trans-bicyclo[2.2.2]octane-2,3-dicarboxylate, dimethyl 1-isopropyl-4-methyl trans-bicyclo[2.2.2]octane-2,3-dicarboxylate, dipropyl 1-isopropyl-4-methyl trans-bicyclo[2.2.2]octane-2,3-dicarboxylate, bis(2-ethylhexyl) 5-isopropyl-7-methyl trans-bicyclo[2.2.2]octane-2,3-dicarboxylate, dibutyl 5-isopropyl-7-methyl trans-bicyclo[2.2.2]octane-2,3-dicarboxylate, diisopropyl 5-isopropyl-7-methyl trans-bicyclo[2.2.2]octane-2,3-dicarboxylate, dimethyl 5-isopropyl-7-methyl trans-bicyclo[2.2.2]octane-2,3-dicarboxylate, dipropyl 5-isopropyl-7-methyl trans-bicyclo[2.2.2]octane-2,3-dicarboxylate

As explained above, the catalyst components of the invention comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are TiCl₄ and TiCl₃; furthermore, also Ti-haloalcoholates of formula Ti(OR)_{q-y}X_{y} can be used, where q is the valence of titanium, y is a number between 1 and q-1, X is halogen and R is a hydrocarbon radical having from 1 to 10 carbon atoms.

The preparation of the solid catalyst component can be carried out according to several methods.

According to one of these methods, the magnesium dichloride in an anhydrous state, the titanium compound and the electron donor compounds are milled together under conditions in which activation of the magnesium dichloride occurs. The so obtained product can be treated one or more times with an excess of TiCl₄ at a temperature between 80 and 135°C. This treatment is followed by washings with hydrocarbon solvents until chloride ions disappeared. According to a further method, the product obtained by co-milling the magnesium chloride in an anhydrous state, the titanium compound and the electron donor compounds are treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. Another method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold TiCl₄ (generally 0°C); the mixture is heated up to 80-130°C and kept at this temperature for 0.5-2 hours. The treatment with TiCl₄ can be carried out one or more times. The electron donor compounds can be added in the desired ratios during the treatment with TiCl₄. The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) generally between 20 and 500 m²/g and preferably between 50 and 400 m²/g, and a total porosity (by B.E.T. method) higher than 0.2 cm³/g, preferably between 0.2 and 0.6 cm³/g. The porosity (Hg method) due to pores with radius up to 10.000Å generally ranges from 0.3 to 1.5 cm³/g, preferably from 0.45 to 1 cm³/g.

The solid catalyst component has an average particle size ranging from 5 to 120 µm and more preferably from 10 to 100 µm.

As mentioned, in any of these preparation methods the desired electron donor compounds can be added as such or, in an alternative way, can be obtained *in situ* by using an appropriate precursor capable of being transformed in the desired electron donor compound by means, for example, of known chemical reactions such as etherification, alkylation, esterification, transesterification etc. Regardless of the preparation method used, the final amount of the electron donor compound of formula (I) is such that its molar ratio with respect to the Ti atoms is from 0.01 to 3, preferably from 0.2 to 2, more preferably from 0.3-1.5.

The solid catalyst components according to the present invention are converted into catalysts for the polymerization of olefins by reacting them with organoaluminum compounds according to known methods.

In particular, an object of the present invention is a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and
(iii) optionally an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

Suitable external electron-donor compounds (iii) include silicon compounds, ethers, esters, amines, heterocyclic compounds and particularly 2,2,6,6-tetramethylpiperidine and ketones.

Another class of preferred external donor compounds is that of silicon compounds of formula (R₆)ₐ(R₇)_{b}Si(OR₈)_{c}, where a and b are integers from 0 to 2, c is an integer from 1 to 4 and the sum (a+b+c) is 4; R₆, R₇, and R₈, are alkyl, cycloalkyl or aryl radicals with 1-18 carbon atoms optionally containing heteroatoms. Particularly preferred are the silicon compounds in which a is 1, b is 1, c is 2, at least one of R₆ and R₇ is selected from branched alkyl, cycloalkyl or aryl groups with 3-10 carbon atoms optionally containing heteroatoms and R₈ is a C₁-C₁₀ alkyl group, in particular methyl. Examples of such preferred silicon compounds are methylcyclohexyldimethoxysilane, diphenyldimethoxysilane, diisopropyldimethoxysilane, methyl-t-butyldimethoxysilane, dicyclopentyldimethoxysilane (D donor), (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, the silicon compounds in which a is 0, c is 3, R₇ is a branched alkyl or cycloalkyl group, optionally containing heteroatoms, and R₈ is methyl are also preferred. Examples of such preferred silicon compounds are cyclohexyltrimethoxysilane, t-butyltrimethoxysilane and thexyltrimethoxysilane. The electron donor compound (iii) is used in such an amount to give a molar ratio between the organoaluminum compound and said electron donor compound (iii) of from 0.1 to 500, preferably from 1 to 300 and more preferably from 3 to 100.

Therefore, it constitutes a further object of the present invention a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the invention;
(ii) an alkylaluminum compound and,
(iii) optionally an electron-donor compound (external donor).

The polymerization process can be carried out according to known techniques for example slurry or solution polymerization using as diluent or solvent an inert hydrocarbon, or bulk polymerization using the liquid monomer (for example propylene) as a reaction medium. Moreover, it is possible to carry out the polymerization process in gas-phase operating in one or more fluidized or mechanically agitated bed reactors.

Preferred olefins CH₂=CHR are propylene and butene-1.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa.

As explained the catalyst shows very interesting performances in the polymerization of propylene but also in the polymerization of butene-1 being able to generate polybutene-1 in high yields and high stereospecificity.

The following examples are given in order to better illustrate the invention without limiting it.

### CHARACTERIZATIONS

### Determination of Ti

The determination of Ti content in the solid catalyst component has been carried out via inductively coupled plasma emission spectroscopy on "LC.P Spectrometer ARL Accuris".

The sample was prepared by analytically weighting, in a "fluxy" platinum crucible", 0.1-0.3 grams of catalyst and 3 grams of lithium metaborate/tetraborate 1/1 mixture. The crucible is placed on a weak Bunsen flame for the burning step and then after addition of some drops of KI solution inserted in a special apparatus "Claisse Fluxy" for the complete burning. The residue is collected with a 5% v/v HNO₃ solution and then the titanium was analyzed via ICP at a wavelength of 368.52 nm.

### Determination of internal donor content

The determination of the content of internal donor in the solid catalytic compound was done through gas chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of intrinsic viscosity (IV).

A weighed amount of the sample was dissolved in tetrahydronaphthalate (THN) at 135°C controlled temperature. The flow time of this diluted solution is determined with a Sematech Cinevisco system equipped with an Ubbelhode modified capillary viscometer, which is thermostated at 135°C. Irganox 1010 was added as an antioxidant to minimize degradation phenomena of the molecular weight. The IV calculations were performed by using the Huggins' equation and assuming the Huggins' coefficient equal to 0.35. The flow times of solvents and solutions were corrected taking into account the contributions due to the kinetic energy. The solution concentrations were evaluated taking into account the change of THN volumes from room temperature to 135°C.

### Melt flow rate (MFR)

The melt flow rate MIL of the polymer was determined according to ISO 1133 (230°C, 2.16 kg).

### EXAMPLES

### Procedure for preparation of the spherical adduct

An initial amount of microspheroidal MgCl₂·2.8C₂M₅OM was prepared according to the method described in Example 2 of WO98/44009, but operating on larger scale. The support adduct had a P50 of about 25 micron, and an ethanol content of about 56%wt.

### General procedure for the preparation of the solid catalyst component

Into a 500 ml round bottom flask, equipped with mechanical stirrer, cooler and thermometer 250 ml of TiCl₄ were introduced at room temperature under nitrogen atmosphere. Alter cooling to 0°C, while stirring, the internal donor and 10.0 g of the spherical adduct (prepared as described above) were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 ml) in temperature gradient down to 60°C and one time (100 ml) at room temperature. The obtained solid was then dried under vacuum and analyzed. The measured composition of the solid is depicted in Table 1.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 ml of anhydrous hexane, 0.76 g of AlEt_{3,} 0.076 g of dicyclopentyldimethoxysilane (D donor) and 0.006÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### General procedure for the polymerization of 1-butene

A 4-litre steel autoclave equipped with a stirrer, pressure gauge, thermometer, catalyst feeding system, monomer feeding lines and thermostating jacket, was purged with nitrogen flow at 70°C for one hour. Then, 1350 grams of 1-butene were charged into the autoclave, together with 0.7 grams of triisobutylaluminium (TIBA) and 1 N1 of hydrogen. Subsequently, the autoclave was thermostated at the polymerization temperature of 75°C.

About 6 mg of the solid catalyst component was activated with 0.7 g of triisobutylaluminium (TIBA) and 0.036 g of thexyltrimethoxysilane in i-hexane solution. After few minutes of preactivation, the catalyst suspension was charged in a stainless-steel vial and injected into the autoclave by nitrogen overpressure.

After 120 minutes polymerization time, the agitator was stopped, the pressure in the autoclave was increased with nitrogen up to 20 bar-g, and the bottom valve was opened to discharge the polymer/monomer solution into a heated steel tank. The solution was treated for 10 min with steam. After cooling at room temperature, the steel tank was opened and the wet polymer was collected. It was dried in an oven under vacuum at 70°C over 3 nights.

### Examples 1-6, and Comparative examples 1-5

Various donors were used in the preparation of the solid catalyst component, following the description given above. The donors used are listed in Table 1.

The thus obtained solid catalyst components were analyzed for their composition, and were tested in polymerization of propylene, using the method described above. The titanium and internal donor content of the solid catalyst components, and their performance in polymerization are also shown in Table 1.

### Example 7

The solid catalyst component of Example 1 was used in the polymerization of 1-butene, according to the general polymerization method described above. The polymerization performance and the analysis results of the polymer are shown in Table 2.

**Table 1. Composition and performance of exemplified catalysts in polymerization of propylene**

| **Ex.** | **Internal donor** | | **Ti** | **Mileage** | **XI** | **MIL** |
|---|---|---|---|---|---|---|
| | **Name** | **%wt** | **wt%** | **kg/g** | **wt%** | **g/10'** |
| 1 | Diethyl *trans*-bicyclo[2.2.2]octane-2,3-dicarboxylate | 9.7 | 2.6 | 69 | 98.4 | 4.3 |
| 2 | Diisobutyl *trans*-bicyclo[2.2.2]octane-2,3-dicarboxylate | 15.8 | 3.3 | 76 | 97.8 | 6.8 |
| 3 | Diethyl 1-isopropyl-4-methyl *trans-*bicyclo[2.2.2]octane-2,3-dicarboxylate | 18.5 | 3.2 | 41 | 96.6 | 4.2 |
| 4 | Diethyl 5-isopropyl-7-methyl *trans-*bicyclo[2.2.2]octane-2,3-dicarboxylate | 11.0 | 2.9 | 53 | 97.9 | 3.4 |
| 5 | Diisobutyl 5-isopropyl-7-methyl *trans-*bicyclo[2.2.2]octane-2,3-dicarboxylate | 14.2 | 3.1 | 40 | 96.9 | 6.2 |
| 6 | Diethyl 1,4-dimethyl *trans-*bicyclo[2.2.2]octane-2,3-dicarboxylate | 21.1 | 2.7 | 25 | 97.4 | 3.2 |
| C1 | Diethyl *cis*-bicyclo[2.2.2]octane-2,3-di-carboxylate | 6.3 | 3.2 | 9 | 94.8 | 12.2 |
| C2 | Diethyl *endo-,exo*-bicyclo[2.2.1]hept-5-ene-2,3-di-carboxylate | ND | 3.4 | 13 | 94.7 | ND |
| C3 | Diethyl *endo-,endo*-bicyclo[2.2.1]hept-5-ene-2,3-di-carboxylate | ND | 3.3 | 14 | 96.0 | ND |
| C4 | Diethyl *endo-,exo*-bicyclo[2.2.1]heptane-2,3-di-carboxylate | 13.4 | 3.2 | 16 | 95.3 | 7.2 |
| C5 | Diethyl *endo-,endo*-bicyclo[2.2.1]heptane-2,3-di-carboxylate | 4.6 | 3.4 | 27 | 95.6 | 1.3 |

| | | | | | | |
|---|---|---|---|---|---|---|
| N.D. no data | | | | | | |

**Table 2. Composition and performance of exemplified catalysts in polymerization of 1-butene**

| **Ex.** | **Internal donor** | | **Ti** | **Mileage** | **XI** | **IV** |
|---|---|---|---|---|---|---|
| | **Name** | **%wt** | **wt%** | **kg/g** | **wt%** | **dL/g** |
| 7 | Diethyl *trans*-bicyclo[2.2.2]octane-2,3-dicarboxylate | 9.7 | 2.6 | 42 | 98.1 | 1.82 |

## Claims

1. A solid catalyst component for the polymerization of olefins comprising Mg, Ti and an electron donor compound of the following formula (I) 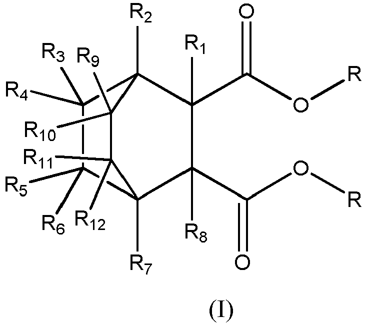 In which
the R₁ to R₁₂ groups, equal to or different from each other, are hydrogen, halogen or C₁-C₁₅ hydrocarbon groups, optionally containing an heteroatom selected from halogen, P, S, N, O and Si, the R groups equal to or different from each other, are C₁-C₁₅ hydrocarbon groups and the carboxylate groups are in trans configuration with respect to each other.

2. The catalyst component of claim 1 in which R groups are selected from C₁-C₁₀ alkyl groups.

3. The catalyst component of claim 1 in which R₁ and R₈ are selected from hydrogen and C₁-C₅ alkyl groups.

4. The catalyst component of claim 3 in which R₁ and R₈ groups are not simultaneously alkyl groups.

5. The catalyst component of claim 4 in which R₁ and R₈ groups are hydrogen.

6. The catalyst component of claim 1 in which the R₂-R₇ and R₉-R₁₂ groups are independently selected from hydrogen and C₁-C₁₀ hydrocarbon groups.

7. The catalyst component of claim 1 in which only one R₂-R₇ and R₉-R₁₂ groups for each cycle of the bicycle structure (I) is selected from hydrocarbon groups.

8. The catalyst component of claim 1 in which all the R₁-R₁₂ groups are hydrogen.

9. A catalyst for the (co)polymerization of olefins CH₂=CHR, in which R is hydrogen or a hydrocarbyl radical with 1-12 carbon atoms, comprising the product obtained by contacting:
the solid catalyst component according to any of the preceding claims and
an alkylaluminum compound and
optionally an external electron donor compound.

10. A process for the (co)polymerization of olefins carried out in the presence of the catalyst according to claim 9.

11. A process according to claim 10 in which the olefin is butene-1.

12. A process according to claim 10 in which the olefin is propylene.

## Patentansprüche

1. Feste Katalysatorkomponente für die Polymerisation von Olefinen, umfassend Mg, Ti und eine Elektronendonorverbindung mit der folgenden Formel (I) 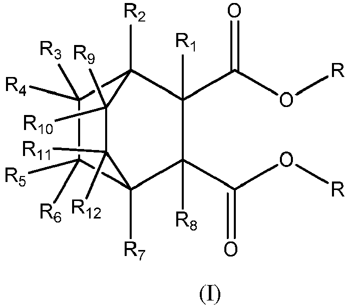 wobei
die Gruppen R₁ bis R₁₂, die gleich oder voneinander verschieden sind, Wasserstoff, Halogen oder C₁-C₁₅-Kohlenwasserstoffgruppen sind, die gegebenenfalls ein Heteroatom ausgewählt aus Halogen, P, S, N, O und Si enthalten, die R-Gruppen, die gleich oder voneinander verschieden sind, C₁-C₁₅-Kohlenwasserstoffgruppen sind und die Carboxylatgruppen in der trans-Konfiguration zueinander vorliegen.

2. Katalysatorkomponente nach Anspruch 1, wobei die R-Gruppen ausgewählt sind aus C₁-C₁₀-Alkylgruppen.

3. Katalysatorkomponente nach Anspruch 1, wobei R₁ und R₈ ausgewählt sind aus Wasserstoff und C₁-C₅-Alkylgruppen.

4. Katalysatorkomponente nach Anspruch 3, wobei die Gruppen R₁ und R₈ nicht gleichzeitig Alkylgruppen sind.

5. Katalysatorkomponente nach Anspruch 4, wobei die Gruppen R₁ und R₈ Wasserstoff sind.

6. Katalysatorkomponente nach Anspruch 1, wobei die Gruppen R₂-R₇ und R₉-R₁₂ unabhängig ausgewählt sind aus Wasserstoff und C₁-C₁₀-Kohlenwasserstoffgruppen.

7. Katalysatorkomponente nach Anspruch 1, wobei nur eine der Gruppen R₂-R₇ und R₉-R₁₂ für jeden Cyclus der bicyclischen Struktur (I) ausgewählt ist aus Kohlenwasserstoffgruppen.

8. Katalysatorkomponente nach Anspruch 1, wobei alle der Gruppen R₁-R₁₂ Wasserstoff sind.

9. Katalysator zur (Co)polymerisation von Olefinen CH₂=CHR, wobei R Wasserstoff oder ein Kohlenwasserstoffrest mit 1-12 Kohlenstoffatomen ist, welcher das Produkt umfasst, das durch Kontaktieren von:
der festen Katalysatorkomponente gemäß einem der vorhergehenden Ansprüche und
einer Alkylaluminiumverbindung und
gegebenenfalls einer externen Elektronendonorverbindung erhalten wird.

10. Verfahren zur (Co)polymerisation von Olefinen, das in Anwesenheit des Katalysators gemäß Anspruch 9 durchgeführt wird.

11. Verfahren nach Anspruch 10, wobei das Olefin Buten-1 ist.

12. Verfahren nach Anspruch 10, wobei das Olefin Propylen ist.

## Revendications

1. Constituant catalytique solide pour la polymérisation d'oléfines comprenant Mg, Ti et un composé donneur d'électrons de la formule (I) suivante 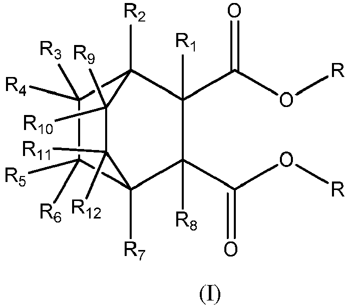 dans laquelle
les groupes R₁ à R₁₂, identiques ou différents les uns des autres, représentent hydrogène, halogène ou des groupes hydrocarbonés en C₁-C₁₅, contenant éventuellement un hétéroatome choisi parmi halogène, P, S, N, O et Si, les groupes R, identiques ou différents l'un de l'autre, représentant des groupes hydrocarbonés en C₁-C₁₅ et les groupes carboxylate étant en configuration trans l'un par rapport à l'autre.

2. Constituant catalytique selon la revendication 1, dans lequel les groupes R sont choisis parmi les groupes C₁-C₁₀-alkyle.

3. Constituant catalytique selon la revendication 1, dans lequel R₁ et R₈ sont choisis parmi hydrogène et les groupes C₁-C₅-alkyle.

4. Constituant catalytique selon la revendication 3, dans lequel les groupes R₁ et R₈ ne représentent pas simultanément des groupes alkyle.

5. Constituant catalytique selon la revendication 4, dans lequel les groupes R₁ et R₈ représentent hydrogène.

6. Constituant catalytique selon la revendication 1, dans lequel les groupes R₂-R₇ et R₉-R₁₂ sont choisis indépendamment parmi hydrogène et les groupes hydrocarbonés en C₁-C₁₀.

7. Constituant catalytique selon la revendication 1, dans lequel seulement un des groupes R₂-R₇ et R₉-R₁₂ pour chaque cycle de la structure bicyclique (I) est choisi parmi les groupes hydrocarbonés.

8. Constituant catalytique selon la revendication 1, dans lequel tous les groupes R₁-R₁₂ représentent hydrogène.

9. Catalyseur pour la (co)polymérisation d'oléfines CH₂=CHR, dans lesquelles R représente hydrogène ou un radical hydrocarbyle comprenant 1-12 atomes de carbone, comprenant le produit obtenu par la mise en contact :
du constituant catalytique solide selon l'une quelconque des revendications précédentes et
d'un composé d'alkylaluminium et
éventuellement d'un composé donneur d'électrons externe.

10. Procédé pour la (co)polymérisation d'oléfines réalisé en présence du catalyseur selon la revendication 9.

11. Procédé selon la revendication 10, dans lequel l'oléfine est le butène-1.

12. Procédé selon la revendication 10, dans lequel l'oléfine est le propylène.
